# EUROPEAN PATENT APPLICATION

(11) **EP 4 738 924 A1**
(43) Date of publication of application: **06.05.2026**
(21) Application number: 25206512.3
(22) Date of filing: 02.10.2025
(51) Int. Cl.: H04W 36/02, H04W 84/12, H04W 76/15

(54) **ROAMING SIGNALING**

(30) Priority: 04.11.2024 US 202463716040 P
(71) Applicant: Apple Inc., Cupertino, CA 95014 (US)
(72) Inventor: MONAJEMI, Pooya, Cupertino, California, 95014 (US); AJAMI, Abdel Karim, Cupertino, California, 95014 (US); MEHRNOUSH, Morteza, Cupertino, California, 95014 (US); KNECKT, Jarkko L., Cupertino, California, 95014 (US); GHOSH, Chittabrata, Cupertino, California, 95014 (US); SEOK, Yong Ho, Cupertino, California, 95014 (US)
(74) Representative: Simmons & Simmons

(57) **Abstract**

Embodiments herein describe systems, methods, and apparatuses for roaming operations in Wi-Fi. In some embodiments, a frame formats for the roaming operation include a Multi-link Multi-device (MLMD) link add request and a MLMD link add response. The station (STA) may send the MLMD link add request to an origin Access Point (AP) multi-link device (MLD) to initiate a roaming operation to a target AP MLD. The origin AP MLD may send the STA the MLMD link add response.

## Description

### TECHNICAL FIELD

This application relates generally to wireless communication systems, including signaling and frames for link add request and response.

### BACKGROUND

Wireless communication technology uses various standards and protocols to transmit data between an access point and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

In the 802.11 standard for WLAN, an access point (AP) is a device that creates a wireless local area network (WLAN), or Wi-Fi^{®} network. It may be connected to a wired network, such as an Ethernet network, and provides wireless access to that network for other devices. A station is a device that is capable of being wirelessly connected to the AP to join the WLAN network. Stations can be laptops, smartphones, tablets, or any other device with a WLAN adapter.

APs and stations communicate with each other using the Wi-Fi^{®} protocol. Various protocols have been established to increase security over a wireless communication network. For example, Simultaneous Authentication of Equals is the core authentication protocol of WPA3-Personal, and is mandated to be supported by all Wi-Fi^{®} Alliance certified devices, including both access points (APs) and non-AP stations (STAs).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example signal flow diagram of a two-step roaming operation in accordance with some embodiments.
FIG. 2 illustrates an example of a multi-link multi device (MLMD) link reconfiguration request frame action field format in accordance with some embodiments.
FIG. 3 illustrates an example MLMD reconfiguration configuration field in accordance with some embodiments.
FIG. 4A illustrates example UHR Roaming Block ACK configuration parameters that may be included in the Block ACK configuration of the configuration field of a request in accordance with some embodiments.
FIG. 4B illustrates example Block ACK transfer options in accordance with some embodiments.
FIG. 5A illustrates an example of link configuration parameters and TID configuration parameters that may be included in the configuration field of a request in accordance with some embodiments.
FIG. 5B illustrates example TID options that may be indicated in the option parameter in accordance with some embodiments.
FIG. 6 illustrates an example MLMD link reconfiguration response action field format in accordance with some embodiments.
FIG. 7 illustrates example Block ACK parameters that may be included in the parameters field of a response from an origin AP to a STA in accordance with some embodiments.
FIG. 8 illustrates example Stream Classification Service (SCS) parameters that may be included in the parameters field of a response from an origin AP to a STA in accordance with some embodiments.
FIG. 9 illustrates an example two-step roaming frame exchange between an STA and an origin AP in accordance with some embodiments.
FIG. 10 illustrates an example one-step roaming frame exchange between an STA and an origin AP in accordance with some embodiments.
FIG. 11 illustrates a method performed by an STA, according to embodiments herein.
FIG. 12 illustrates a method performed by an AP MLD, according to embodiments herein.
FIG. 13 illustrates an example system for performing signaling between a wireless device and a network device, according to embodiments disclosed herein.

### DETAILED DESCRIPTION

Wireless communication technology uses various standards and protocols to transmit data between an access point and a wireless communication device. One standard that is used for wireless communication is Institute of Electrical and Electronics Engineers (IEEE) 802.11 standard for Wireless Local Area Networks (WLAN) (commonly known to industry groups as Wi-Fi^{®}). Wi-Fi^{®} provides a convenient way to establish a network between devices. A device (e.g., a station) may connect to a Wi-Fi^{®} access point to join a network and connect to the internet wirelessly. Wi-Fi^{®} security is important to protect data and devices from unauthorized access.

Various embodiments are described with regard to a station (STA) and Access Point (AP). However, reference to a STA and AP is merely provided for illustrative purposes. The example embodiments may be utilized with any electronic component that may establish a connection to a network and is configured with the hardware, software, and/or firmware to exchange information and data with the network. Therefore, the STAs and APs as described herein are used to represent any appropriate electronic component.

In wireless networks, roaming refers to the process by which a STA moves from one AP to another within the same network, allowing uninterrupted connectivity. The STA may switch to a new AP with a stronger signal as it moves across different areas within the coverage zone.

In some embodiments, the roaming operation may use Add Link signaling. The Add Link signaling operation may enable more seamless and efficient roaming in wireless networks. For instance, a sequence may start with sending Add Link to an origin AP multi-link device (MLD). In some embodiments a two-step process can separate the route-switch operation to ensure minimal disruption.

Some embodiments herein define signaling and frame formats for roaming operation using Add Link signaling. Embodiments herein describe a number of features including sequence number handling, Block Acknowledgement (BA) sessions, and power management.

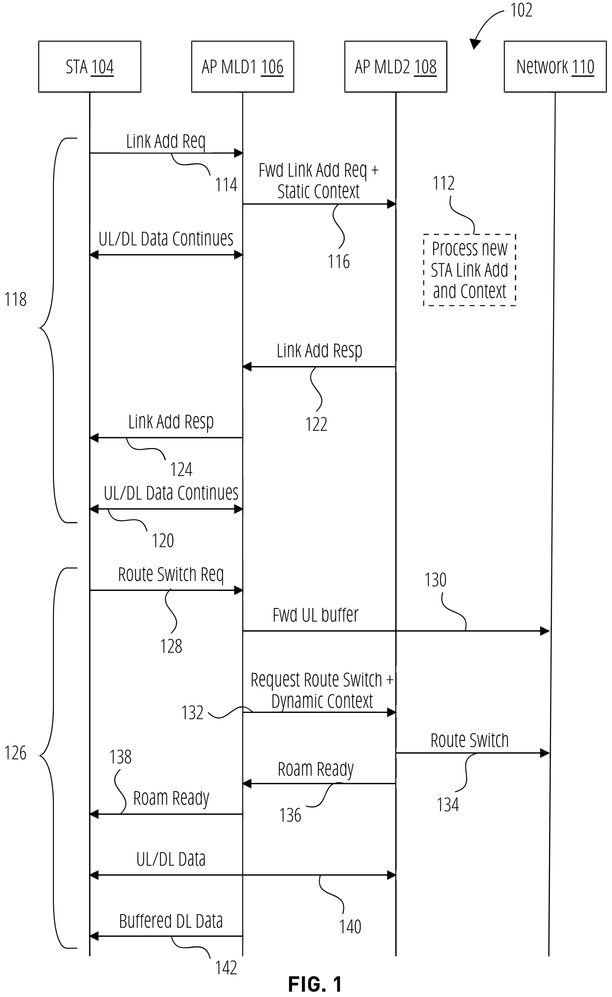

FIG. 1 illustrates an example signal flow diagram 102 of a two-step roaming operation in accordance with some embodiments. In some embodiments, an STA 104 may roam from an origin AP (e.g., AP MLD1 106) to a target AP (e.g., AP MLD2 108) using a single-step operation involving one request from the STA 104 and one response from the ordinal AP. During the roaming procedure, the target AP processes 112 the new STA link addition and context. This processing may take time. If a single-step roaming operation is performed, the processing of the target AP may be a blocking procedure during which the STA 104 is not able to send and receive data. Therefore, the processing step may introduce latency in the single-step operation.

The illustrated two-step roaming operation may reduce the latency experienced by the STA 104 by splitting up the roaming operation to allow the STA 104 to continue to communicate with the original AP while the target AP processes 112 the new STA link addition and context. In the illustrated embodiment, AP MLD1 106 is the original AP and AP MLD2 108 is the target AP. STA 104 roams from AP MLD1 106 to AP MLD2 108.

A first step of the two-step roaming operation may be link add request/response signaling 118 that initiates the exchange. This does not switch the data path yet. As shown, the STA 104 may send AP MLD1 106 a link add request 114. During the link add process, static context may be transferred to AP MLD2 108. For example, AP MLD1 106 may forward the link add request and static context 116 to the AP MLD2 108. The AP MLD2 108 may process 112 the new STA link add request and the static context. The AP MLD2 108 may send a link add response 122 to the AP MLD1 106. This response may be sent prior to the AP MLD2 108 finishing processing the new STA link add request and context. The AP MLD1 106 may forward the link add response 124 to the STA 104. Data reception and transmission may continue with the origin AP during this exchange. As shown, the uplink and downlink data 120 may continue between the AP MLD1 106 and the STA 104.

The second step of the two-step roaming operation may include the STA 104 initiating a data path switch 126 with a second frame. Any dynamic context can be transferred in this stage. The STA 104 may be required to pause uplink during this (short) exchange. As shown, the STA 104 may send a route switch request 128 to the AP MLD1 106. The AP MLD1 106 may forward an uplink buffer 130 to the network 110. The AP MLD1 106 may send a request route switch and dynamic context 132 to the AP MLD2 108. The AP MLD2 108 may send a route switch message 134 to the network 110. The AP MLD2 108 may send the roam ready message 136 to the AP MLD1 106, and the AP MLD1 106 may send the roam ready message 138 to the STA 104. The STA 104 and the AP MLD2 108 may begin transmitting uplink/downlink data 140, and the AP MLD1 106 may send buffered downlink data 142 to the STA 104.

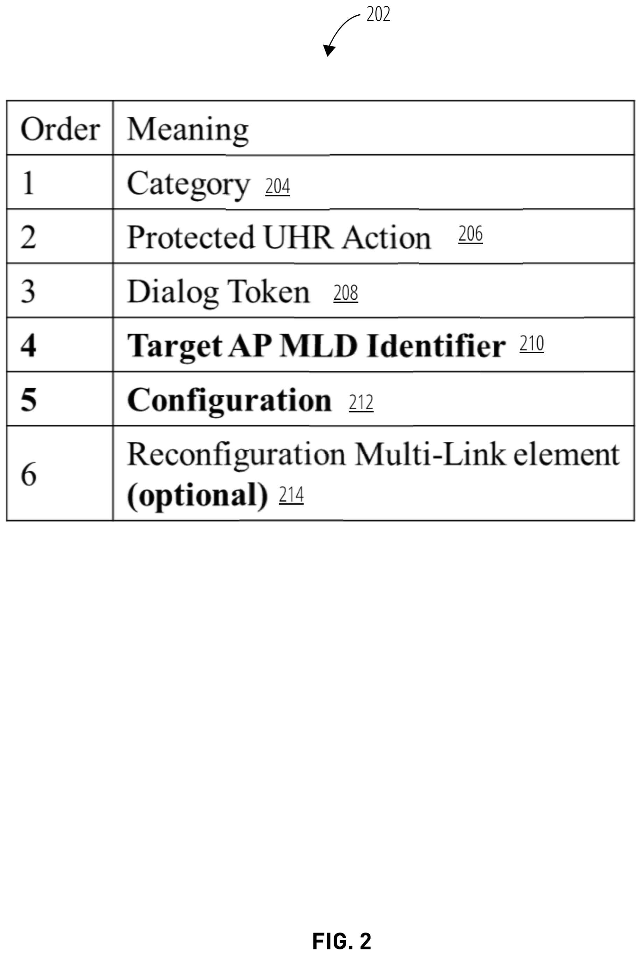

FIG. 2 illustrates an example of a multi-link multi device (MLMD) link reconfiguration request frame 202 action field format in accordance with some embodiments. The MLMD link reconfiguration request frame 202 may provide a new Ultra-High Reliability (UHR) Protected Action Frame that may be used for an MLMD Link Reconfiguration Request. The frame may include additional fields when compared with a EHT Protected Action Frame Link Reconfiguration Request.

The MLMD link reconfiguration request frame 202 may be used to add a link with the target AP MLD. For example, STA 104 of FIG. 1 may send an MLMD link reconfiguration request frame 202 for the link add request 114. Some embodiments may use a timeout/removal of links with origin AP.

In some embodiment, variants of the same action frame (e.g., MLMD link reconfiguration request frame 202) can be used for both Link Add Request (e.g., link add request 114 of FIG. 1) and route switch operations (e.g., route switch request 128 of FIG. 1). Accordingly, the STA may send the MLMD link reconfiguration request frame 202 for both a link addition request and a route switch request. The MLMD link reconfiguration request frame sent for the link addition request may have a different configuration and/or content compared to the MLMD link reconfiguration request frame sent for the route switch request. For example, the link add request may include a reconfiguration multi-link element and the route switch request may not.

As shown, the MLMD link reconfiguration request frame 202 may include a category field 204, a protected UHR action field 206, a dialog token field 208, a target AP MLD identifier field 210, a configuration field 212, and a reconfiguration multi-link element field 214. The category field 204 may specify the category of the action being requested. The protected UHR action field 206 may be used to secure the frame. The dialog token field 208 may serve as an identifier for correlating requests and responses between a STA and an AP.

The target AP MLD identifier field 210 may identify the AP that the STA desires to roam. In some embodiments, the target AP MLD identifier field 210 may include an AP MLD ID. The AP MLD ID is a value that is strictly local to the origin AP MLD (e.g., received from a reduced neighbor report (RNR)). In some embodiments, the target AP MLD identifier field 210 may include an AP MLD Address (e.g., received through Beacon/Probe Response).

The configuration field 212 may provide roaming configurations. Details regarding the parameters of the configuration field 212 are described with reference to other figures herein.

The reconfiguration multi-link element field 214 may be present for a link add operation for each added link. In some embodiment, the reconfiguration multi-link element field 214 may be absent in a route switch operation.

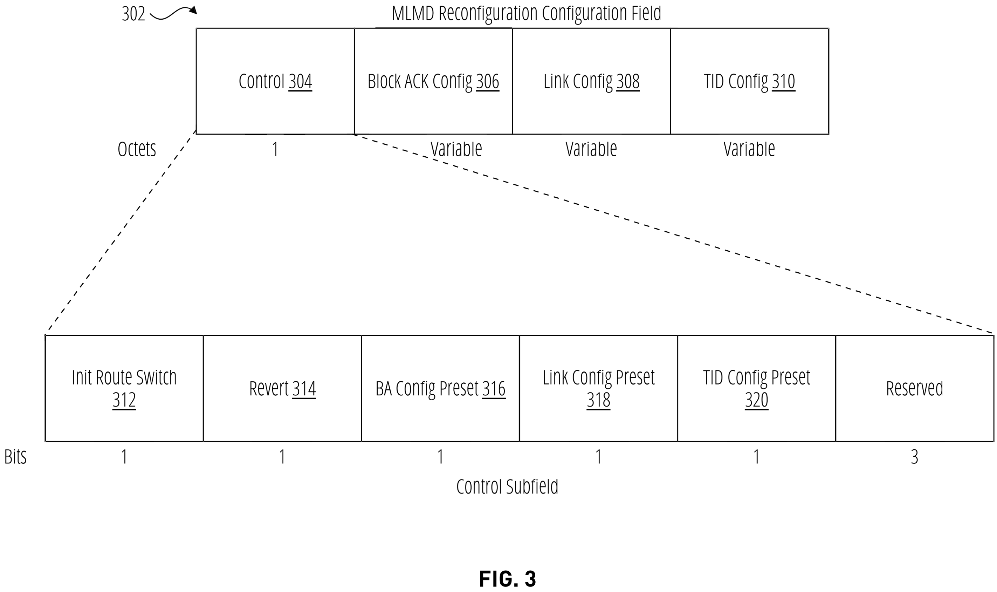

FIG. 3 illustrates an example MLMD reconfiguration configuration field 302 in accordance with some embodiments. The MLMD reconfiguration configuration field 302 is an example of the configuration field 212 in FIG. 2 and may be part of the link add request 114 and route switch request 128 sent by the STA 104 in FIG. 1. The MLMD reconfiguration configuration field 302 may include a control subfield 304. In addition, the MLMD reconfiguration configuration field 302 may include one or more configurations for the roaming procedure (e.g., Block ACK configuration 306, link configuration 308, and Traffic Identifier (TID) configuration 310).

The MLMD reconfiguration configuration field 302 may include items that the STA might want to configure or modify during a roam. In some embodiments, other parameters that are expected to remain the same may be expected to be transferred by default between the APs. For example, in some embodiments, the STA may include configurations in the MLMD reconfiguration configuration field 302 that have a change, and not include configurations that do not include changes. For configurations not included, the current AP MLD may assume that there is not a change in the configuration and send the configurations/context to the target AP without change.

The control subfield 304 may include an initiate route switch bit 312, a revert bit 314, and a number of bits that indicate the presence or absence of configurations in the MLMD reconfiguration configuration field 302 (e.g., BA configuration preset bit 316, link configuration preset bit 318, and TID configuration preset bit 320).

The initiate route switch bit 312 may be used to request a route switch. For example, in some embodiments, the STA may set the initiate route switch bit 312 to one to request a route switch. The STA may set the initiate route switch bit 312 to one in the first request to indicate a single-step roam. For a two-step roam, the STA may set the initiate route switch bit 312 to zero in the first request (e.g., link add request 114 of FIG. 1) and to one in the second request (e.g., route switch request 128 of FIG. 1).

The revert bit 314 may be used to indicate that the STA has decided not to roam. For example, in some embodiments, the STA may set the revert bit 314 to one in the second phase (e.g., route switch request 128 of FIG. 1) to signal that the STA does not intend to roam to the indicated target AP MLD. The use case for the revert bit 314 may be when the STA previously added links but did not initiate route switch and decides to cancel the roam operation.

Additional bits in the control subfield 304 may indicate the presence or absence of certain configurations in the MLMD reconfiguration configuration field 302. For instance, BA configuration preset bit 316 may indicate the presence or absence of Block ACK configuration 306. The link configuration preset bit 318 may indicate the presence or absence of link configuration 308. The TID configuration preset bit 320 may indicate the presence or absence of TID configuration 310.

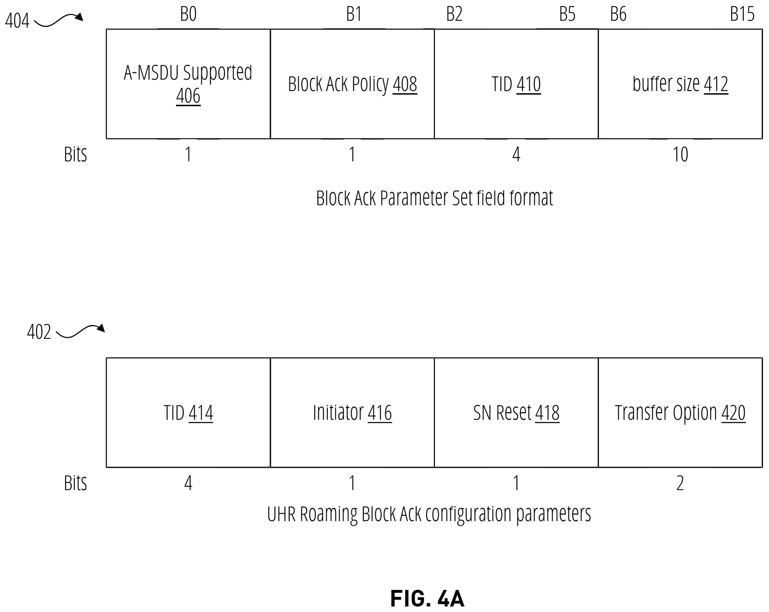

FIG. 4A illustrates example UHR Roaming Block ACK configuration parameters 402 that may be included in the Block ACK configuration (e.g., Block ACK configuration 306 of FIG. 3) of the configuration field (e.g., MLMD reconfiguration configuration field 302 of FIG. 3) of a request (e.g., link add request 114 or route switch request 128 of FIG. 1) in accordance with some embodiments.

As shown, a Block ACK parameter set field format 404 may comprise a 16-bit format, with each section having specific bit allocations. The aggregated MAC Service Data Unit (A-MSDU) supported 406 may be a bit that indicates if A-MSDUs are supported at the target AP. The Block ACK Policy 408 may be a bit that specifies the acknowledgment policy for the Block ACK session. The TID 410 may be four bits that identifies the traffic type and priority level of the data stream for which the Block ACK session is being established. The buffer size 412 may be ten bits that may specify the maximum number of MPDUs that the receiver is capable of buffering for this Block ACK session. A-MSDU support, Block ACK Policy, Buffer Size, and Timeout from STA side may not be expected to change. These parameters may be transferred automatically as part of the static context transfer between APs as long as BA session is kept.

The Block ACK sessions for the current AP may be expected to be operational at the target AP when the STA roams as part of the context transfer. In some embodiments, the STA may use the UHR Roaming Block ACK configuration parameters 402 to make changes to the Block ACK sessions when roaming to the target AP.

The BA Configuration that the STA shares in the roaming request may include one or more parameters shown in UHR Roaming Block ACK configuration parameters 402. Zero or more of Block ACK configuration parameters (per Block ACK (BA) session) may be included if desired operation is non-default. The UHR Roaming Block ACK configuration parameters 402 may include a TID 414, an initiator bit 416, an SN reset bit 418, and a transfer option 420. TID 414 may identify the traffic type and priority level of the data stream for which the Block ACK session is being changed. The initiator bit 416 may indicate whether the STA is the initiator or responder of the Block ACK setup. The SN reset bit 418 may be used to reset the sequence number (SN), and the transfer option 420 may be used to indicate a desired option for transferring the Block ACK session from the current AP to the target AP.

A default Block ACK session transfer may involve the SN being transferred to the target AP to have the SN continue. However, the SN reset bit 418 may be used by the STA to indicate an interest to reset the SN to zero at the target AP. For instance, the SN reset bit 418 may be set to zero to indicate no SN reset and to one to indicate an SN reset. If an SN reset is indicated, the SN value may be reset to zero at the target AP.

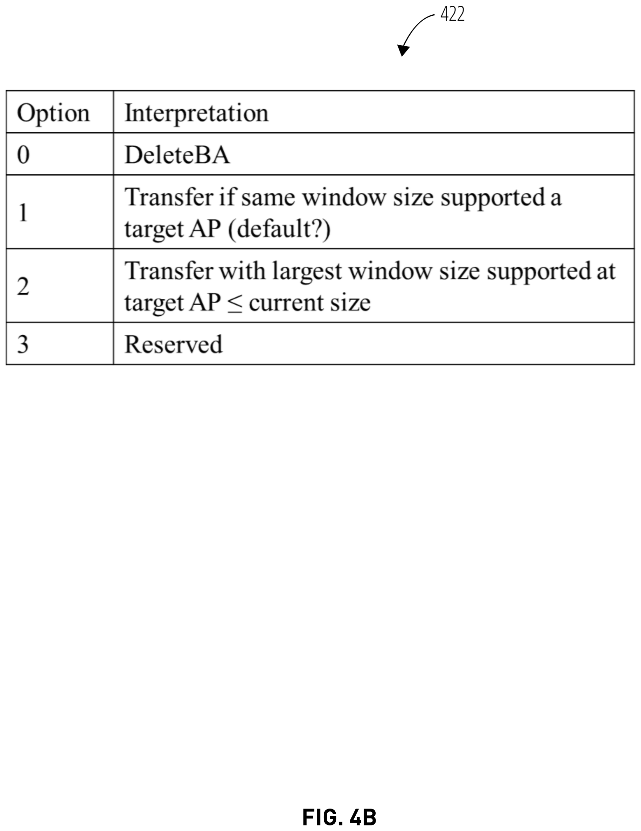

FIG. 4B Illustrates example Block ACK transfer options 422 in accordance with some embodiments. Transfer option 420 may be set to option 0 to indicate that the STA desires to delete the Block ACK session. Transfer option 420 may be set to option 1 to transfer the window with the same size if the target AP supports the same size (or larger), otherwise the AP is to delete the Block ACK session at the target AP MLD. For option 2, if the target AP supports only a smaller size, the Block ACK window is reduced to the max size supported by the target AP. In some embodiments, additional transfer options may be included.

For a default configuration, the SN reset bit 418 may indicate no SN reset, and the transfer option 420 may be set to transfer option 1. Note that the outcome of the requested operations and any potential changes at the target AP may be reported by the origin AP in the Response frame.

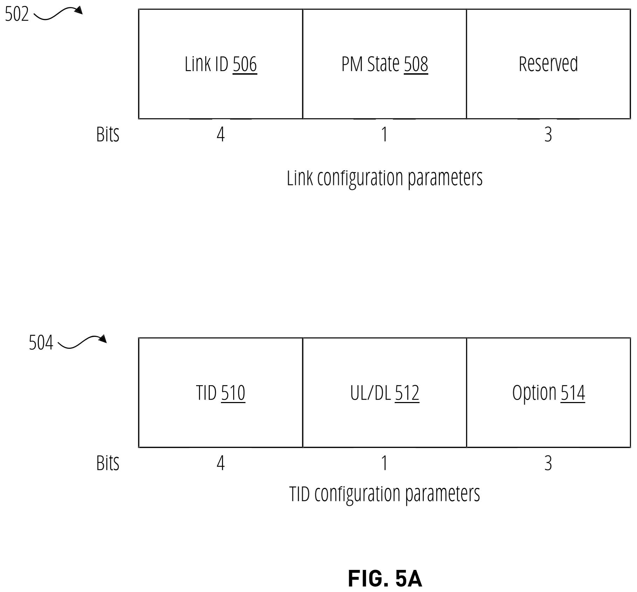

FIG. 5A illustrates an example of link configuration parameters 502 and TID configuration parameters 504 that may be included in the configuration field (e.g., MLMD reconfiguration configuration field 302 of FIG. 3) of a request (e.g., link add request 114 or route switch request 128 of FIG. 1) in accordance with some embodiments. There may be certain parameters that the STA may desire to reconfigure on a link level rather than across an entire association. The link configuration parameters 502 may be used for the link level changes.

Zero or more of link configuration parameters 502 may be included by the STA, if non-default operation is desired. As shown, the link configuration parameters 502 may include a link ID 506 and a power management (PM) state 508. Link ID 506 may indicate which link the parameters are applicable. The PM state 508 may indicate the PM state of the added link on the target AP, after route switch response. The PM state 508 may be used to indicate initially which link STA wants to receive downlink from target AP MLD (MLD/Enhanced Multi-Link Single Radio (EMLSR) roaming). For example, the STA may indicate one link to receive the downlink from the target AP and use other links to receive the buffered data from the origin AP. In some embodiments a default behavior may be that all added links are initially in PM state.

While the illustrated embodiment includes only PM state 508 in the link configuration parameters 502 additional items may be included. For example, optional items may include Operating Mode Indication (OMI) signaling. In some embodiments, configuration parameters may include Target Wake Time (TWT), Unscheduled Automatic Power Save Delivery (U-APSD), Wireless Network Management (WNM) Sleep, etc. In some embodiments, configuration parameters may include Unicast Group Addressed frames delivery.

In some embodiments, the TID configuration parameters 504 may include a TID 510 to identify the traffic for which the changes apply. The TID configuration parameters 504 may also include an uplink/downlink bit 512 to indicate whether the change applies to uplink or downlink. An option parameter 514 may indicate an option to apply at the target AP.

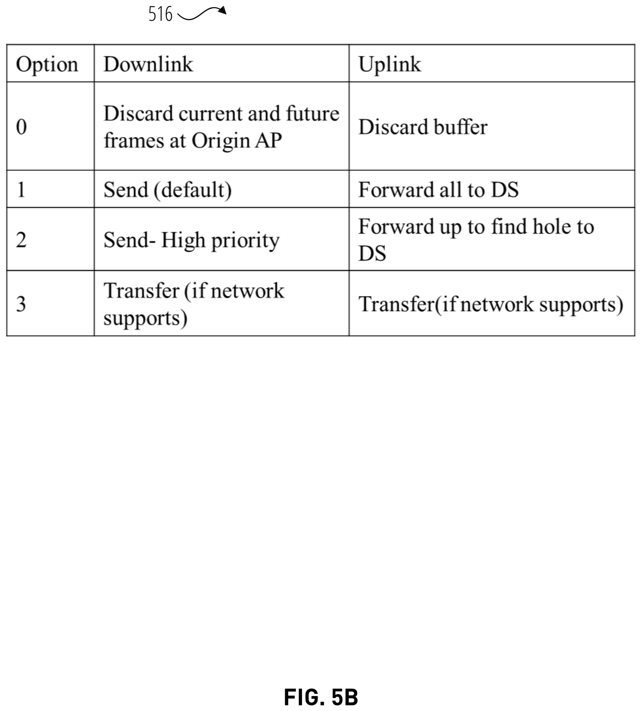

FIG. 5B illustrates example TID options 516 that may be indicated in the option parameter 514 in accordance with some embodiments. There may be zero or more of TID configuration parameters. The options may indicate to the origin AP how to handle buffered data. As shown, options for buffered downlink data may include discard current and future frames at origin AP, send (this may be default), send with high priority, and transfer (e.g., transfer buffered data to target AP). Options for buffered uplink data may include discard buffer, forward all to distribution services (DS), forward up to the first hole to DS, and transfer. Note that some combinations of per TID configuration and Block AC configuration may be invalid.

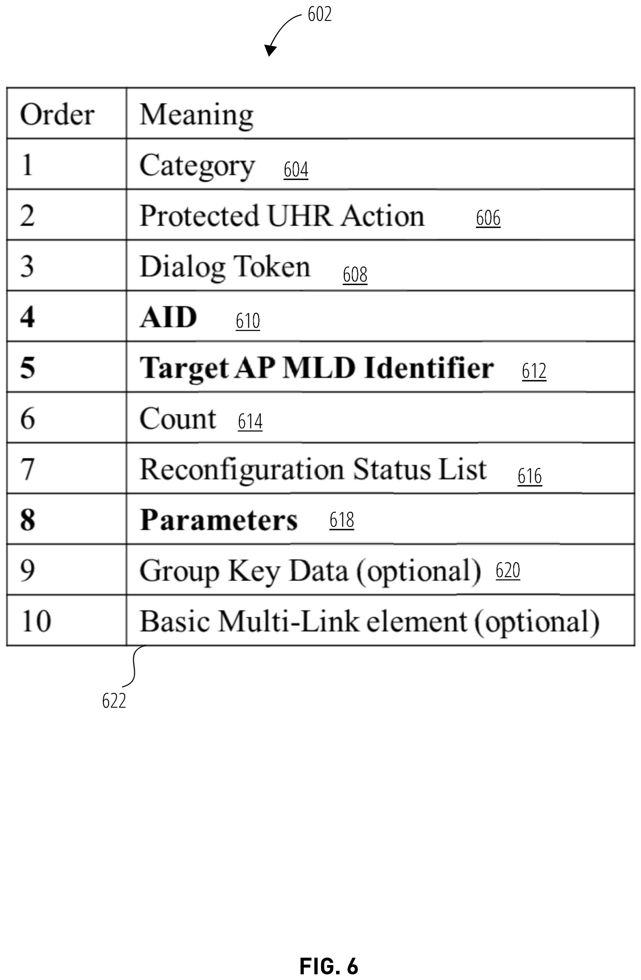

FIG. 6 illustrates an example MLMD link reconfiguration response 602 action field format in accordance with some embodiments. The MLMD link reconfiguration response 602 may provide a new UHR Protected Action Frame that may be used for an MLMD Link Reconfiguration Response. The frame may include additional fields when compared with an EHT Protected Action Frame Link Reconfiguration Response. The MLMD link reconfiguration response 602 may be used by an AP to send a response. For example, AP MLD1 106 of FIG. 1 may send an MLMD link reconfiguration response 602 for the link add response 124 or the roam ready message 138.

As shown, the MLMD link reconfiguration request frame MLMD link reconfiguration response 602 may include a category field 604, a protected UHR action field 606, a dialog token field 608, an association identifier (AID) field 610, a target AP MLD identifier field 612, a count field 614, a reconfiguration status list field 616, a parameters field 618 (optionally), a group key data field 620, and a basic multi-link element field 622 (optionally).

The category field 604 may specify the category of the action being requested. The protected UHR action field 606 may be used to secure the frame. The dialog token field 608 may serve as an identifier for correlating requests and responses between a STA and an AP. The AID field 610 may include an ID that an AP assigns to an associated STA. The AID may be assigned at the time of association. During link reconfiguration the AP MLD may send the AID in the response.

The target AP MLD identifier field 612 may identify the AP that the STA desires to roam. In some embodiments, the target AP MLD identifier field 612 may include an AP MLD ID. The AP MLD ID is a value that is strictly local to the origin AP MLD (e.g., received from an RNR). In some embodiments, the target AP MLD identifier field 612 may include an AP MLD Address (e.g., received through Beacon/Probe Response).

The count field 614 may indicate the number of subfields or elements in the response frame, particularly within the reconfiguration status list field 616. The reconfiguration status list field 616 may provide a status update on each requested reconfiguration item. Each entry in this list may indicate whether a specific request (e.g., adding or removing a link, changing frequency band, or adjusting power settings) was successful, partially applied, or failed.

The parameters field 618 may include roaming parameters. Details regarding the roaming parameters are described with reference to other figures herein. The group key data field 620 may provide updated security information when a link reconfiguration involves changes that affect group security. The basic multi-link element field 622 may include details regarding the multi-link configuration details and capabilities of the AP. The basic multi-link element field 622 may be present for a Link Add operation for each added link and may be absent in route switch operation.

In some embodiments, the parameters field 618 may include Block ACK parameters. In some embodiments, the Block ACK parameters in the response frame may include a single bit that indicates whether all Block ACK sessions have been transferred or no Block ACK sessions will be transferred. In some such embodiments, no other Block ACK parameters (or configurations) may be defined.

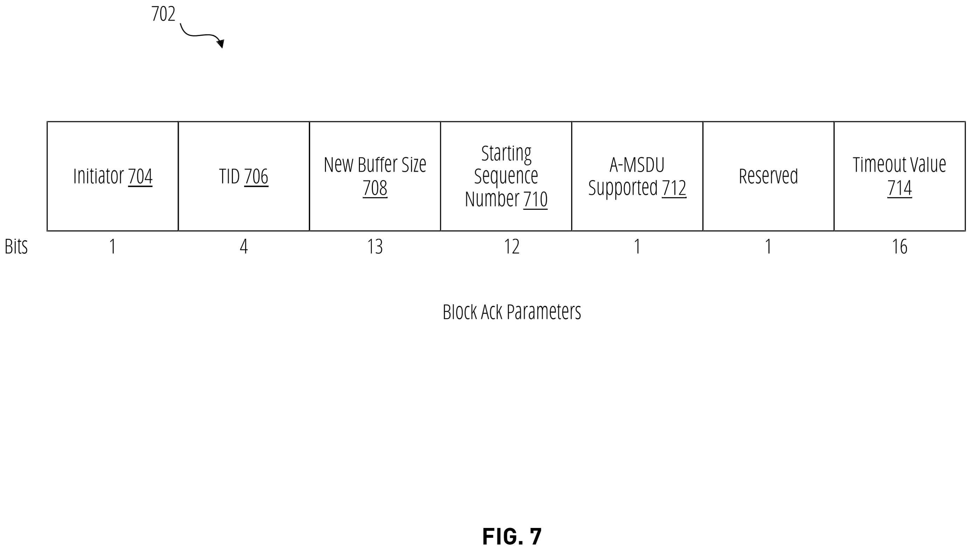

FIG. 7 illustrates example Block ACK parameters 702 that may be included in the parameters field (e.g., parameters field 618 of FIG. 6) of a response from an origin AP to a STA (e.g., link add response 124 or roam ready message 138 of FIG. 1) in accordance with some embodiments. There may be zero or more of Block ACK parameters, the parameters may be included if changed and omitted if not changed. The Block ACK parameters 702 may include an initiator 704, a TID 706, a new buffer size 708, a starting sequence number 710, an A-MSDU supported 712, and a timeout value 714. The parameters such as starting sequence number 710 may be per TID 706.

The initiator 704 may indicate the originator/recipient (uplink/downlink). The TID 706 may include a traffic identifier value. The new buffer size 708 may indicate the new buffer size at target AP. For example, if the target AP has different capabilities than the origin AP, the new buffer size 708 may indicate the window size for the new buffer size at target AP. The new buffer size 708 may be set to zero if the BA session is deleted at the target. The A-MSDU supported 712 and the timeout value 714 may be set by the target AP (as in Add Block Acknowledgment (ADDBA) Response).

The starting sequence number 710 may indicate the starting sequence number at the target AP for downlink. For uplink the starting sequence may be reserved. The origin AP may need to allocate a gap of sequence numbers for potential downlink frames from DS until the route switch is completed. The Starting Sequence Number assigned to the target AP may be shared with the STA so that no downlink loss is assumed by STA and the STA does not wait for downlink from the target AP until the window is moved if outside current window.

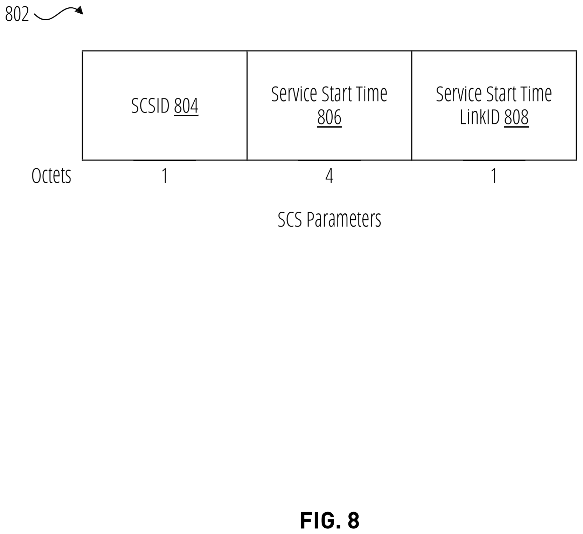

FIG. 8 illustrates example Stream Classification Service (SCS) parameters 802 that may be included in the parameters field (e.g., parameters field 618 of FIG. 6) of a response from an origin AP to a STA (e.g., link add response 124 or roam ready message 138 of FIG. 1) in accordance with some embodiments. The SCS parameters 802 may include an SCSID 804, a service start time 806, and a service start time LinkID 808. The parameter field may include zero or more of SCS parameters. The parameters may be included if changed and omitted if not changed.

The SCS parameters 802 may include Stream Classification Service Identifier (SCSID) 804. The SCSID 804 may be an identifier used to uniquely distinguish different SCS sessions. The service start time 806 values (and associated service start time LinkID 808) may indicate the values at the target AP for each SCS. The service start time 806 may indicate the start time for the SCS, and the service start time LinkID 808 may specify the particular link for which the Service Start Time is applicable.

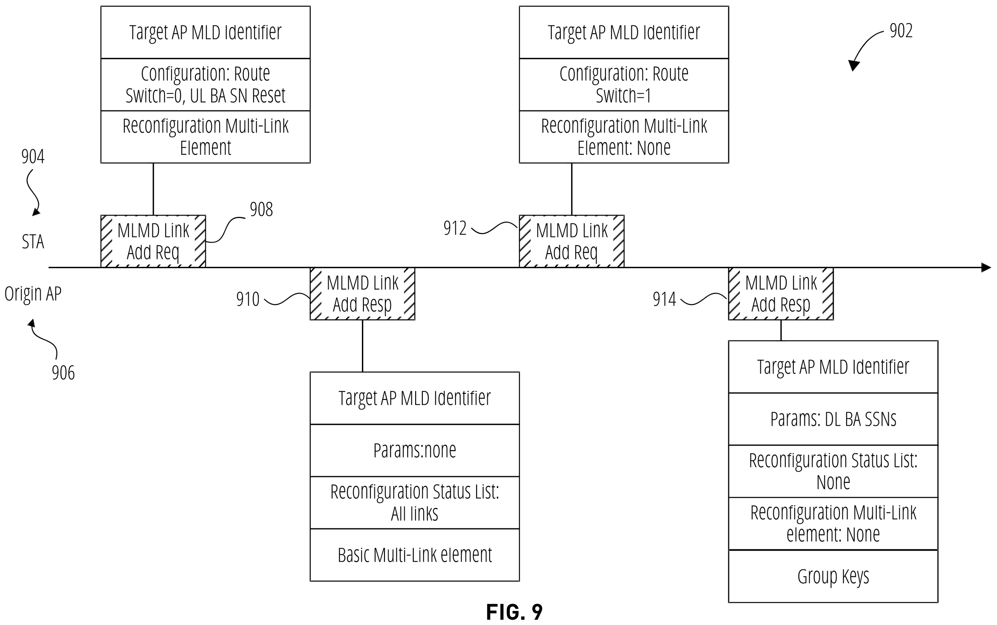

FIG. 9 illustrates an example two-step roaming frame exchange 902 between an STA 904 and an origin AP 906 in accordance with some embodiments. The illustrated roaming frame exchange 902 is a two-step Link Add and Route Switch exchange. The roaming frame exchange 902 may be used by the STA 904 to roam from the origin AP 906 to a target AP.

As shown, the STA 904 may send an MLMD link add request 908 to the origin AP 906. The MLMD link add request 908 may include a target AP MLD identifier, configuration, and a reconfiguration Multi-Link element (as discussed in more detail with reference to the previous figures). In the illustrated embodiment, the configuration of the MLMD link add request 908 includes a route switch element set to zero, an uplink Block ACK configuration with an SN reset. The route switch element set to zero indicates that the STA 904 does not want to perform a link switch yet. The UL Block ACK SN reset indicates that the SN for uplink should be reset for the target AP.

The origin AP 906 may communicate with the target AP and respond to the STA 904 by sending an MLMD link add response 910. The MLMD link add response 910 may include the target AP MLD identifier, no parameters (indicating no changes from the target AP), a reconfiguration status list indicating all links were successful, and a basic multi-link element.

The STA may send a second MLMD link add request 912 when it is ready to roam to the target AP. The second MLMD link add request 912 may include a configuration with the route switch set to one to indicate the request to roam to the target AP. The origin AP 906 may send a second MLMD link add response 914 that includes the downlink Block ACK SNs and group keys. The STA 904 can move to the target AP.

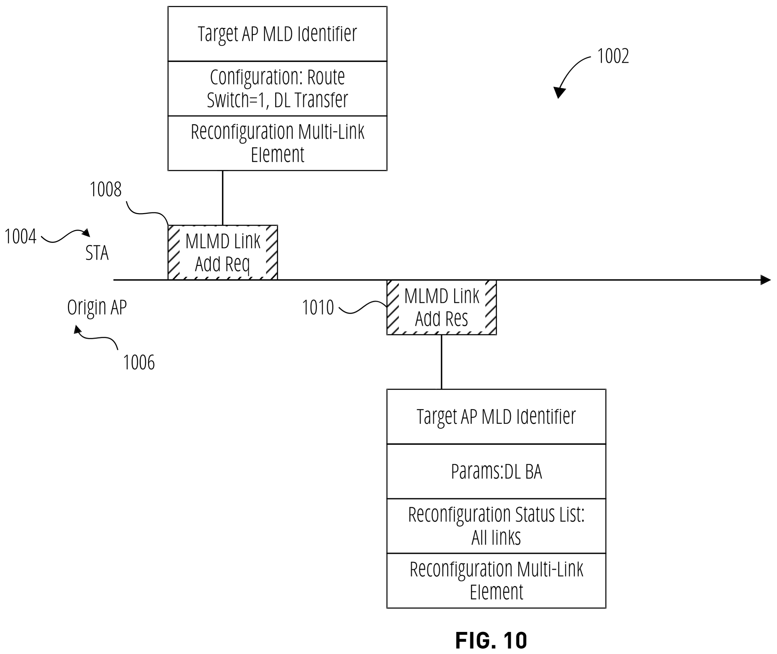

FIG. 10 illustrates an example one-step roaming frame exchange 1002 between an STA 1004 and an origin AP 1006 in accordance with some embodiments. The illustrated roaming frame exchange 1002 is a one-step Link Add and Route Switch exchange. The roaming frame exchange 1002 may be used by the STA 1004 to roam from the origin AP 1006 to a target AP.

In the illustrated embodiment, the route switch is requested in the first request frame. For example, the STA 1004 may send an MLMD link add request 1008 to the origin AP 1006. The MLMD link add request 1008 may include a target AP MLD identifier, configuration, and a reconfiguration Multi-Link element (as discussed in more detail with reference to the previous figures). In the illustrated embodiment, the configuration of the MLMD link add request 1008 includes a route switch element set to one, and the downlink buffer set to a transfer option. The route switch flag indicates that the route switch is to happen in a single step, and the transfer downlink option indicates that the origin AP should transfer downlink buffer data.

The origin AP 1006 may perform the process with the target AP to establish the links. The origin AP 1006 may send an MLMD Link Add response 1010 to the STA 1004. The MLMD Link Add response 1010 may include the target AP MLD identifier, downlink Block ACK parameters (indicating some parameter change for the Block ACK sessions), a reconfiguration status list indicating all links were successful, and a basic multi-link element. The STA 904 can move to the target AP.

Some embodiments herein define frame format details for a roaming operation. Some embodiments describe MLMD Link Add Request and MLMD Link Add Response. Some embodiments describe support for a two-step roam procedure using variations in signaling. Some embodiments include configurations defined in the request frame and parameters defined in the response frame.

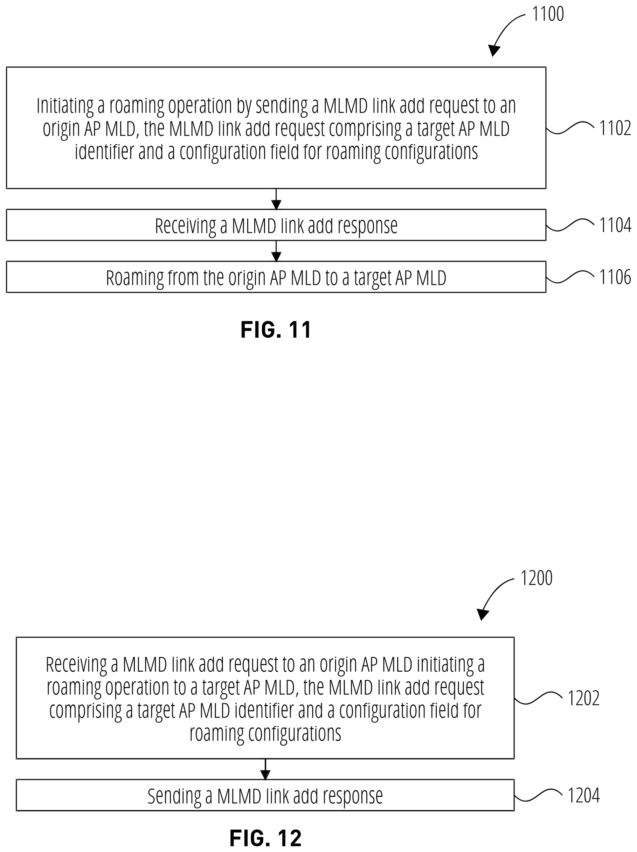

FIG. 11 illustrates a method 1100 performed by an STA, according to embodiments herein. The illustrated method 1100 includes initiating 1102 a roaming operation by sending an MLMD link add request to an origin AP MLD, the MLMD link add request comprising a target AP MLD identifier and a configuration field for roaming configurations. The method 1100 further includes receiving 1104 an MLMD link add response. The method 1100 further includes roaming 1106 from the origin AP MLD to a target AP MLD.

In some embodiments of the method 1100, the configuration field comprises a control subfield that includes an initiate route switch bit, a revert bit, and one or more bits to indicate a presence of configurations in the configuration field. In some such embodiments, the roaming configurations in the MLMD link add request comprise a block acknowledgement configuration, a link configuration, and TID configuration. In certain such embodiments, the block acknowledgement configuration includes an SN reset bit that indicates whether an SN should be reset to zero at the target AP MLD, and a transfer option that indicates how buffered data should be handled by the origin AP MLD. In certain other such embodiments, the link configuration comprises a link ID and a PM state indicator for the link ID. In certain yet other such embodiments, the TID configuration comprises an indication of how buffered data should be handled per the TID.

In some embodiments of the method 1100, the MLMD link add response comprises the target AP MLD identifier, an AID, and a parameters field.

In some such embodiments, the parameters field comprises block acknowledgement parameters with a new buffer size field that indicates the new buffer size at the target AP MLD, an A-MSDU support indicator, a timeout value, and a starting sequence number for frames from the target AP MLD. In some other such embodiments, the parameters field comprises SCS parameters comprising an SCSID, a service start time, and a service start time link ID.

In some embodiments, the method 1100 further comprises sending a link switch request comprising a second configuration field with an initiate route switch flag indicating to the AP MLD to perform the route switch, wherein the roaming operation is a two-step roam operation and the configuration field of the MLMD link add request indicates the STA does not want to perform a route switch at that time.

Embodiments contemplated herein include an apparatus comprising means to perform one or more elements of the method 1100. This apparatus may be, for example, an apparatus of a STA (such as STA 1302 as described herein).

Embodiments contemplated herein include one or more non-transitory computer-readable media comprising instructions to cause an electronic device, upon execution of the instructions by one or more processors of the electronic device, to perform one or more elements of the method 1100. This non-transitory computer-readable media may be, for example, a memory of a STA (such as a memory 1306 of an STA 1302, as described herein).

Embodiments contemplated herein include an apparatus comprising logic, modules, or circuitry to perform one or more elements of the method 1100. This apparatus may be, for example, an apparatus of a STA (such as an STA 1302, as described herein).

Embodiments contemplated herein include an apparatus comprising: one or more processors and one or more computer-readable media comprising instructions that, when executed by the one or more processors, cause the one or more processors to perform one or more elements of the method 1100. This apparatus may be, for example, an apparatus of a STA (such as an STA 1302, as described herein).

Embodiments contemplated herein include a signal as described in or related to one or more elements of the method 1100.

Embodiments contemplated herein include a computer program or computer program product comprising instructions, wherein execution of the program by a processor is to cause the processor to carry out one or more elements of the method 1100. The processor may be a processor of a STA (such as a processor(s) 1304 of an STA 1302, as described herein). These instructions may be, for example, located in the processor and/or on a memory of the STA (such as a memory 1306 of an STA 1302, as described herein).

FIG. 12 illustrates a method 1200 performed by an AP MLD, according to embodiments herein. The illustrated method 1200 includes receiving 1202 an MLMD link add request to an origin AP MLD initiating a roaming operation to a target AP MLD, the MLMD link add request comprising a target AP MLD identifier and a configuration field for roaming configurations. The method 1200 further includes sending 1204 an MLMD link add response.

In some embodiments of the method 1200, the configuration field comprises a control subfield that includes an initiate route switch bit, a revert bit, and one or more bits to indicate a presence of configurations in the configuration field. In some such embodiments, the roaming configurations in the MLMD link add request comprise a block acknowledgement configuration, a link configuration, and a TID configuration. In certain such embodiments, the block acknowledgement configuration includes an SN reset bit that indicates whether an SN should be reset to zero at the target AP MLD, and a transfer option that indicates how buffered data should be handled by the origin AP MLD. In certain other such embodiments, the link configuration comprises a link ID and a PM state indicator for the link ID. In certain yet other such embodiments, the TID configuration comprises an indication of how buffered data should be handled per TID.

In some embodiments of the method 1200, the MLMD link add response comprises the target AP MLD identifier, an AID, and a parameters field. In some such embodiments, the parameters field comprises block acknowledgement parameters with a new buffer size field that indicates the new buffer size at the target AP MLD, an A-MSDU support indicator, a timeout value, and a starting sequence number for frames from the target AP MLD. In some other such embodiments, the parameters field comprises SCS parameters comprising an SCSID, a service start time, and a service start time link ID.

In some embodiments, the method 1200 further comprises receiving a link switch request comprising a second configuration field with an initiate route switch flag indicating to the AP MLD to perform the route switch, wherein the roaming operation is a two-step roam operation and the configuration field of the MLMD link add request indicates the STA does not want to perform a route switch at that time.

Embodiments contemplated herein include an apparatus comprising means to perform one or more elements of the method 1200. This apparatus may be, for example, an apparatus of an AP (such as an AP 1318, as described herein).

Embodiments contemplated herein include one or more non-transitory computer-readable media comprising instructions to cause an electronic device, upon execution of the instructions by one or more processors of the electronic device, to perform one or more elements of the method 1200. This non-transitory computer-readable media may be, for example, a memory of an AP (such as a memory 1322 of an AP 1318, as described herein).

Embodiments contemplated herein include an apparatus comprising logic, modules, or circuitry to perform one or more elements of the method 1200. This apparatus may be, for example, an apparatus of an AP (such as an AP 1318, as described herein).

Embodiments contemplated herein include an apparatus comprising: one or more processors and one or more computer-readable media comprising instructions that, when executed by the one or more processors, cause the one or more processors to perform one or more elements of the method 1200. This apparatus may be, for example, an apparatus of an AP (such as an AP 1318, as described herein).

Embodiments contemplated herein include a signal as described in or related to one or more elements of the method 1200.

Embodiments contemplated herein include a computer program or computer program product comprising instructions, wherein execution of the program by a processing element is to cause the processing element to carry out one or more elements of the method 1200. The processor may be a processor of an AP (such as a processor(s) 1320 of an AP 1318, as described herein). These instructions may be, for example, located in the processor and/or on a memory of the AP (such as a memory 1322 of an AP 1318, as described herein).

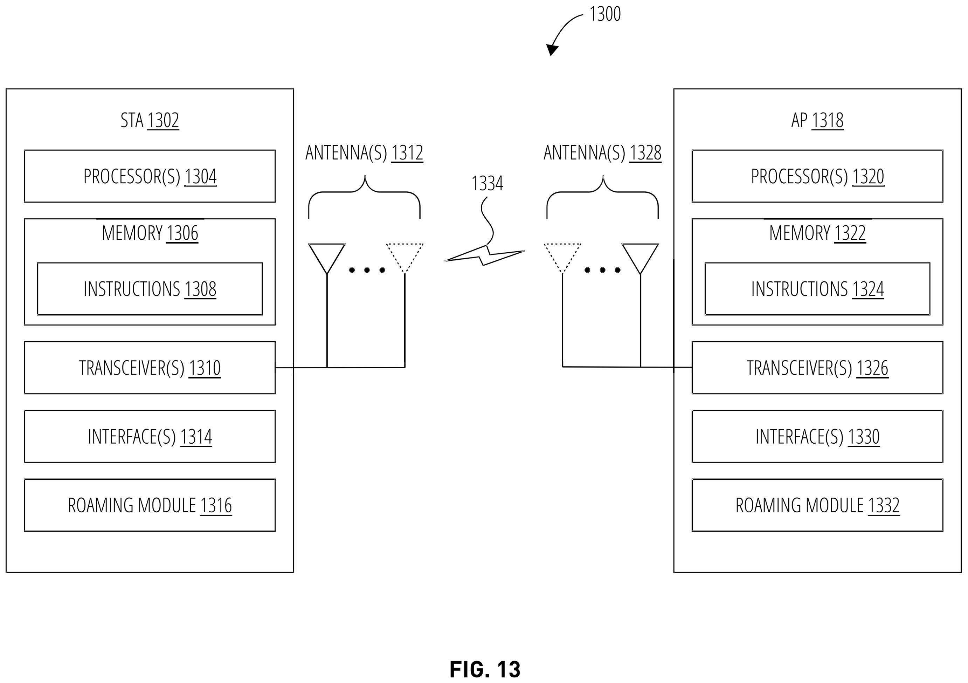

FIG. 13 illustrates a system 1300 for performing signaling 1334 between an STA 1302 and an AP 1318, according to embodiments disclosed herein. The system 1300 may be a portion of a wireless communications system as herein described. The STA 1302 may be, for example, a UE of a wireless communication system. The AP 1318 may be, for example, an access point of a wireless communication system.

The STA 1302 may include one or more processor(s) 1304. The processor(s) 1304 may execute instructions such that various operations of the STA 1302 are performed, as described herein. The processor(s) 1304 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The STA 1302 may include a memory 1306. The memory 1306 may be a non-transitory computer-readable storage medium that stores instructions 1308 (which may include, for example, the instructions being executed by the processor(s) 1304). The instructions 1308 may also be referred to as program code or a computer program. The memory 1306 may also store data used by, and results computed by, the processor(s) 1304.

The STA 1302 may include one or more transceiver(s) 1310 that may include radio frequency (RF) transmitter circuitry and/or receiver circuitry that use the antenna(s) 1312 of the STA 1302 to facilitate signaling (e.g., the signaling 1334) to and/or from the STA 1302 with other devices (e.g., the AP 1318).

The STA 1302 may include one or more antenna(s) 1312 (e.g., one, two, four, or more). For embodiments with multiple antenna(s) 1312, the STA 1302 may leverage the spatial diversity of such multiple antenna(s) 1312 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the STA 1302 may be accomplished according to precoding (or digital beamforming) that is applied at the STA 1302 that multiplexes the data streams across the antenna(s) 1312 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the STA 1302 may implement analog beamforming techniques, whereby phases of the signals sent by the antenna(s) 1312 are relatively adjusted such that the (joint) transmission of the antenna(s) 1312 can be directed (this is sometimes referred to as beam steering).

The STA 1302 may include one or more interface(s) 1314. The interface(s) 1314 may be used to provide input to or output from the STA 1302. For example, an STA 1302 that is a UE may include interface(s) 1314 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1310/antenna(s) 1312 already described) that allow for communication between the UE and other devices and may operate according to known protocols (e.g., Wi-Fi^{®}, Bluetooth^{®}, and the like).

The STA 1302 may include a roaming module 1316. The roaming module 1316 may be implemented via hardware, software, or combinations thereof. For example, the roaming module 1316 may be implemented as a processor, circuit, and/or instructions 1308 stored in the memory 1306 and executed by the processor(s) 1304. In some examples, the roaming module 1316 may be integrated within the processor(s) 1304 and/or the transceiver(s) 1310. For example, the roaming module 1316 may be implemented by a combination of software components (e.g., executed by a DSP or a general processor) and hardware components (e.g., logic gates and circuitry) within the processor(s) 1304 or the transceiver(s) 1310.

The roaming module 1316 may be used for various aspects of the present disclosure, for example, aspects of FIGS. 1-12. The roaming module 1316 is configured to authenticate the AP 1318 and provide the AP 1318 with authentication credentials.

The AP 1318 may include one or more processor(s) 1320. The processor(s) 1320 may execute instructions such that various operations of the AP 1318 are performed, as described herein. The processor(s) 1320 may include one or more baseband processors implemented using, for example, a CPU, a DSP, an ASIC, a controller, an FPGA device, another hardware device, a firmware device, or any combination thereof configured to perform the operations described herein.

The AP 1318 may include a memory 1322. The memory 1322 may be a non-transitory computer-readable storage medium that stores instructions 1324 (which may include, for example, the instructions being executed by the processor(s) 1320). The instructions 1324 may also be referred to as program code or a computer program. The memory 1322 may also store data used by, and results computed by, the processor(s) 1320.

The AP 1318 may include one or more transceiver(s) 1326 that may include RF transmitter circuitry and/or receiver circuitry that use the antenna(s) 1328 of the AP 1318 to facilitate signaling (e.g., the signaling 1334) to and/or from the AP 1318 with other devices (e.g., the STA 1302).

The AP 1318 may include one or more antenna(s) 1328 (e.g., one, two, four, or more). In embodiments having multiple antenna(s) 1328, the AP 1318 may perform MIMO, digital beamforming, analog beamforming, beam steering, etc., as has been described.

The AP 1318 may include one or more interface(s) 1330. The interface(s) 1330 may be used to provide input to or output from the AP 1318. For example, an AP 1318 that is a base station may include interface(s) 1330 made up of transmitters, receivers, and other circuitry (e.g., other than the transceiver(s) 1326/antenna(s) 1328 already described) that enables the base station to communicate with other equipment in a core network, and/or that enables the base station to communicate with external networks, computers, databases, and the like for purposes of operations, administration, and maintenance of the base station or other equipment operably connected thereto.

The AP 1318 may include a roaming module 1332. The roaming module 1332 may be implemented via hardware, software, or combinations thereof. For example, the roaming module 1332 may be implemented as a processor, circuit, and/or instructions 1324 stored in the memory 1322 and executed by the processor(s) 1320. In some examples, the roaming module 1332 may be integrated within the processor(s) 1320 and/or the transceiver(s) 1326. For example, the roaming module 1332 may be implemented by a combination of software components (e.g., executed by a DSP or a general processor) and hardware components (e.g., logic gates and circuitry) within the processor(s) 1320 or the transceiver(s) 1326.

The roaming module 1332 may be used for various aspects of the present disclosure, for example, aspects of FIGS. 1-12. The roaming module 1332 is configured to authenticate the STA 1302 and provide the STA 1302 with authentication credentials.

For one or more embodiments, at least one of the components set forth in one or more of the preceding figures may be configured to perform one or more operations, techniques, processes, and/or methods as set forth herein. For example, a processor as described herein in connection with one or more of the preceding figures may be configured to operate in accordance with one or more of the examples set forth herein. For another example, circuitry associated with a STA or AP as described above in connection with one or more of the preceding figures may be configured to operate in accordance with one or more of the examples set forth herein.

Any of the above-described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems, or divided or combined in other ways. In addition, it is contemplated that parameters, attributes, aspects, etc., of one embodiment can be used in another embodiment. The parameters, attributes, aspects, etc., are merely described in one or more embodiments for clarity, and it is recognized that the parameters, attributes, aspects, etc., can be combined with or substituted for parameters, attributes, aspects, etc., of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

## Claims

1. A method performed by a station, STA, the method comprising:
initiating a roaming operation by sending a Multi-link Multi-device, MLMD, link add request to an origin Access Point, AP, multi-link device, MLD, the MLMD link add request comprising a target AP MLD identifier and a configuration field for roaming configurations;
receiving a MLMD link add response; and
roaming from the origin AP MLD to a target AP MLD.

2. The method of claim 1, wherein the configuration field comprises a control subfield that includes an initiate route switch bit, a revert bit, and one or more bits to indicate a presence of configurations in the configuration field.

3. The method of claim 2, wherein the roaming configurations in the MLMD link add request comprise a block acknowledgement configuration, a link configuration, and Traffic Identifier, TID, configuration.

4. The method of claim 3, wherein the block acknowledgement configuration includes sequence number, SN, reset bit that indicates whether a SN should be reset to zero at the target AP MLD, and a transfer option that indicates how buffered data should be handled by the origin AP MLD.

5. The method of claim 3, wherein the link configuration comprises a link identifier, ID, and a power management, PM, state indicator for the link ID.

6. The method of claim 3, wherein the TID configuration comprises an indication of how buffered data should be handled per TID.

7. The method of any preceding claim, wherein the MLMD link add response comprises the target AP MLD identifier, an association identifier, AID, and a parameters field.

8. The method of claim 7, wherein the parameters field comprises:
block acknowledgement parameters with a new buffer size field that indicates the new buffer size at the target AP MLD, an aggregated MAC Service Data Unit, A-MSDU, support indicator, a timeout value, and a starting sequence number for frames from the target AP MLD; or
Stream Classification Service, SCS, parameters comprising Stream Classification Service Identifier, SCSID, a service start time, and a service start time link ID.

9. The method of any preceding claim, further comprising sending a link switch request comprising a second configuration field with an initiate route switch flag indicating to the AP MLD to perform the route switch,
wherein the roaming operation is a two-step roam operation and the configuration field of the MLMD link add request indicates the STA does not want to perform a route switch at that time.

10. A method performed by an Access Point, AP, multi-link device, MLD, the method comprising:
receiving a Multi-link Multi-device, MLMD, link add request to an origin Access Point, AP, multi-link device, MLD, initiating a roaming operation to a target AP MLD, the MLMD link add request comprising a target AP MLD identifier and a configuration field for roaming configurations; and
sending a MLMD link add response.

11. The method of claim 10, wherein the configuration field comprises a control subfield that includes an initiate route switch bit, a revert bit, and one or more bits to indicate a presence of configurations in the configuration field.

12. The method of claim 11, wherein the roaming configurations in the MLMD link add request comprise a block acknowledgement configuration, a link configuration, and Traffic Identifier, TID, configuration.

13. The method of claim 12, wherein the block acknowledgement configuration includes sequence number, SN, reset bit that indicates whether a SN should be reset to zero at the target AP MLD, and a transfer option that indicates how buffered data should be handled by the origin AP MLD.

14. An apparatus comprising means to perform the method of any of claim 1 to claim 13.

15. A computer-readable media comprising instructions to cause an electronic device, upon execution of the instructions by one or more processors of the electronic device, to perform the method of any of claim 1 to claim 13.
